# EUROPÄISCHE PATENTSCHRIFT

(11) **EP 0 486 532 B1**
(45) Veröffentlichungstag und Bekanntmachung des Hinweises auf die Patenterteilung: **13.10.1993**
(21) Anmeldenummer: 90911621.2
(22) Anmeldetag: 14.07.1990
(51) Int. Cl.: B23B 29/034

(54) **WERKZEUG FÜR DEN EINSATZ IN WERKZEUGMASCHINEN**
TOOL FOR USE IN MACHINE-TOOLS
OUTIL POUR MACHINES-OUTILS

(30) Priorität: 16.08.1989 DE 3927060
(43) Veröffentlichungstag der Anmeldung: 27.05.1992
(73) Patentinhaber: KOMET Präzisionswerkzeuge Robert Breuning GmbH, D-74354 Besigheim (DE)
(72) Erfinder: SCHEER, Gerhard, D-7121 Löchgau (DE); SCHNEIDER, Eberhard, D-7122 Besigheim (DE)
(74) Vertreter: Wolf, Eckhard, Dr.-Ing.
(86) Internationale Anmeldenummer: EP9001156
(87) Internationale Veröffentlichungsnummer: WO9102615

(56) Entgegenhaltungen:
- DE-A- 3 128 047
- DE-B- 2 200 485
- US-A- 2 558 815
- US-A-27 804 675

## Beschreibung

Die Erfindung betrifft ein Werkzeug, insbesondere eine Feindrehbohrstange, für den Einsatz in Werkzeugmaschinen mit einem an eine rotierende Maschinenspindel ankuppelbaren Schaftteil, einem mit dem Schaftteil drehfest verbundenen und gegenüber diesem quer verstellbaren Kopfteil und einem im Kopfteil angeordneten Schneidenträger, vgl. US-A-27 80 467.

Bei Werkzeugen dieser Art zur Feineinstellung des Kopfteils weist der Verstellmechanismus einen relativ großen Platzbedarf auf. Da die Bauteile des Verstellmechanismus nicht beliebig verkleinert werden können, sind dem Werkzeugdurchmesser nach unten hin enge Grenzen gesetzt. Hinzu kommt, daß die Genauigkeit der Feinzustellung bei bekannten Verstellmechanismen oft zu wünschen übrig läßt.

Der Erfindung liegt die Aufgabe zugrunde, ein Werkzeug der eingangs angegebenen Art zu entwickeln, das auch bei einem sehr kleinen Werkzeugdurchmesser eine hohe Zustellgenauigkeit sowie eine ausreichende Steifigkeit aufweist.

Zur Lösung dieser Aufgabe wird gemäß der Erfindung vorgeschlagen, daß am Schaftteil und am Kopfteil des Werkzeugs einander zugewandte, an ihren stirnseitigen Enden mit radial verlaufenden Stirnnuten versehene zylindrische Paßzapfen angeformt sind, daß zwischen den stirnseitigen Enden der Paßzapfen ein Kreuzkupplungselement mit axial nach beiden Seiten überstehenden, in die zueinander senkrecht ausgerichteten Stirnnuten der Paßzapfen radial verschiebbar eingreifenden Kupplungsklauen angeordnet ist, daß die beiden Paßzapfen in zueinander exzentrische Paßbohrungen einer gegenüber den Paßzapfen verdrehbaren Exzenterhülse eingreifen, und daß das Kopfteil und das Schaftteil unter Zwischenspannen des Kupplungselements und/oder der Exzenterhülse mittels eines durch Bohrungen des Schaftteils und des Kreuzkupplungselements mit radialem Spiel hindurchgreifenden, in ein Gewinde des Kopfteils eingedrehten und gegen ein Widerlager im Bereich des Schaftteils abgestützten Spannankers verbunden sind.

Die zueinander exzentrischen Paßbohrungen sind zweckmäßig so angeordnet, daß die Längsachse der den Paßzapfen des Schaftteils aufnehmenden Paßbohrung mit der Werkzeugdrehachse fluchtet und daß die Längsachse der den Paßzapfen des Kopfteils aufnehmenden Paßbohrung einen Parallelversatz gegenüber der Werkzeugdrehachse aufweist.

Vorteilhafterweise ist das Kreuzkupplungselement als Ringstück mit nach beiden Seiten axial überstehenden, um 90° gegeneinander verdreht angeordneten Klauenpaaren ausgebildet. Beim Verdrehen der Exzenterhülse wird durch das Kreuzkupplungselement die Exzenterbewegung in eine radiale Verschiebebewegung zwischen dem Kopfteil und dem Schaftteil umgesetzt. Die Bewegungsumsetzung erfordert im Kupplungsbereich eine gewisse Spielfreiheit und eine leichte Kippung des Kreuzkupplungselements gegenüber der Werkzeugachse. Um dies zu ermöglichen, sind die Klauenflanken des Kreuzkupplungselements von ihrer Wurzel zur Spitze hin nicht exakt parallel ausgerichtet, sondern schräg aufgeweitet. Auch die stirnseitigen Anlageflächen des Ringteils sind nicht eben, sondern bilden eine stumpfe Kegelfläche.

Gemäß einer bevorzugten Ausgestaltung der Erfindung weist das Schaftteil eine sich zur Zapfenseite verengende axiale Stufenbohrung auf, in deren erweitertem Teil ein Kopf des Spannankers geführt ist. Zwischen den einander gegenüberliegenden Schultern der Stufenbohrung und des Spannankerkopfes sind vorzugsweise als Federpaket ausgebildete Federmittel angeordnet, die dafür sorgen, daß die Exzenterhülse und das Kreuzkupplungselement bei angezogenem Spannanker zwischen dem Kopfteil und dem Schaftteil des Werkzeugs zwar mit einer gewissen Kraft eingespannt und dadurch spielfrei gestellt, aber gegenüber diesen Teilen dennoch verdrehbar bzw. quer verschiebbar sind. Zwischen dem Spannankerkopf und dem Federpaket kann zusätzlich ein Distanzring angeordnet werden.

Gemäß einer weiteren vorteilhaften Ausgestaltung der Erfindung ist die Stufenbohrung auf der Seite des Spannankerkopfes mit einer Endschraube verschlossen.

Der Innenraum der Stufenbohrung zwischen dem Spannankerkopf und der Endschraube kann mit einem vorzugsweise aus einem schweren Werkstoff, wie Blei, bestehenden Füllstück ausgefüllt sein. Dieses Füllstück hat einmal die Funktion einer Verdrehsicherung für den Spannanker. Weiter dient es zur Aussteifung des Schaftteils und zur Verbesserung des Dämpfungsverhaltens.

Eine weitere bevorzugte Ausgestaltung der Erfindung sieht vor, daß das spindelseitige Stirnende des Schaftteils mit einem Kupplungsteil verbunden ist, welches mittels eines über eine zur Werkzeugdrehachse senkrechte Planfläche axial überstehenden Paßzapfens mit einer Maschinenspindel kuppelbar ist.

Vorteilhafterweise weisen der Spannanker und gegebenenfalls das Füllstück, die Endschraube und das Kupplungsteil einen axialen Kühlmittelkanal für die Kühlmittelzufuhr zum Spanraum auf. Durch den Kühlmittelkanal kann ein Verstellschlüssel zum Verstellen der Spannkraft des Spannankers eingeführt werden.

Um ein Austreten der Kühlflüssigkeit aus dem Kühlmittelkanal zu vermeiden, kann der Spannankerkopf eine Umfangsnut zur Aufnahme eines gegen die Innenfläche der Stufenbohrung anliegenden elastischen Dichtungsringes aufweisen. Alternativ dazu kann der Dichtungsring zwischen einander gegenüberliegenden Stirnflächen der Endschraube und des Spannankerkopfs angeordnet sein, wobei er sich zweckmäßig in radialer Richtung an einem am Spannankerkopf angeformten, axial überstehenden Hohlzapfen abstützt. Eine Abdichtung des Kühlmittelkanals zwischen dem Schaftteil und dem Kupplungsteil wird durch einen zwischen einander gegenüberliegenden Stirnflächen des Schaftteils und des Kupplungsteils angeordneten, in radialer Richtung an der axial über das Schaftteil überstehenden Endschraube abgestützten elastischen Dichtungsring gewährleistet.

Um das Verdrehen der Exzenterhülse zu erleichtern, ist die Exzenterhülse zweckmäßig mit einem Außenmehrkant für den Eingriff eines Verstellschlüssels versehen. Weiter trägt die Exzenterhülse an ihrem dem Schaftteil oder dem Kopfteil zugewandten Ende einen Skalenring, an welchem der Verstellweg abgelesen werden kann.

Um eine Grobpositionierung zu ermöglichen, ist der Schneidenträger am Kopfteil radial verstellbar und beispielsweise mittels einer Feststellschraube festlegbar angeordnet.

Im folgenden wird die Erfindung anhand zweier in der Zeichnung in schematischer Weise dargestellter Ausführungsbeispiele näher erläutert. Es zeigen
- Fig. 1: eine Seitenansicht einer Feindrehbohrstange in teilweise geschnittener Darstellung;
- Fig. 2: einen Schnitt entlang der Schnittlinie 2-2 der Fig. 1;
- Fig. 3: einen Schnitt entlang der Schnittlinie 3-3 der Fig. 2;
- Fig. 4: ein abgewandeltes Ausführungsbeispiel einer Feindrehbohrstange in einer der Fig. 2 entsprechenden Schnittdarstellung.

Die in der Zeichnung dargestellten Feindrehwerkzeuge bestehen im wesentlichen aus einem Kopfteil 10, einem über ein Kreuzgelenk 12 und einen Spannanker 14 mit dem Kopfteil verbundenen Schaftteil 16 sowie einer gegenüber dem Kopfteil und dem Schaftteil verdrehbaren Exzenterhülse 18. Im Kopfteil ist ein Schneidenhalter 20, der eine Wendeschneidplatte 22 trägt, zum Zwecke der Grobzustellung mittels eines Gewindestifts 24 radial verstellbar und mittels einer Klemmschraube 26 festlegbar angeordnet.

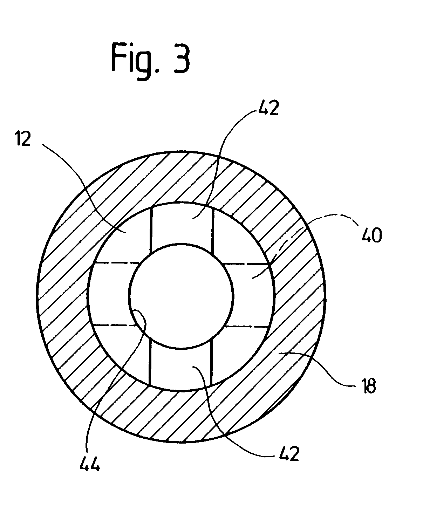

Die Exzenterhülse 18 weist auf ihren dem Kopfteil 10 und dem Schaftteil 16 zugewandten Stirnseite je eine Paßbohrung 32 bzw. 34 auf. Die Paßbohrungen 32 und 34 sind exzentrisch zueinander angeordnet, wobei die Längsachse der schaftteilseitigen Paßbohrung 34 mit der Werkzeugdrehachse fluchtet während die Längsachse der kopfteilseitigen Paßbohrung 32 exzentrisch zur Werkzeugdrehachse angeordnet ist. In die Paßbohrungen 32 bzw. 34 greifen am Kopfteil 10 bzw. am Schaftteil 16 angeformte, axial ausgerichtete zylindrische Paßzapfen 28 bzw. 30 voneinander entgegengesetzten Seiten her ein. Die Paßzapfen 28,30 weisen an ihren stirnseitigen Endflächen radial ausgerichtete Stirnnuten 36,38 auf, in die nach entgegengesetzten Seiten des Kreuzkupplungselements 12 axial überstehende Klauenpaare 40,42 radial verschiebbar eingreifen. Wie insbesondere aus Fig. 3 zu ersehen ist, sind die Klauenpaare 40,42 am Kreuzkupplungselement 12 senkrecht zueinander ausgerichtet. Dementsprechend sind im montierten Zustand auch die Stirnnuten 36,38 an den beiden Paßzapfen 28,30 senkrecht zueinander ausgerichtet. Die mittige Bohrung 44 im Kreuzkupplungselement 12 ist für den Durchtritt des Spannankers 14 bestimmt.

Das Schaftteil 16 enthält eine axial verlaufende durchgehende Stufenbohrung 46, durch die hindurch der einen Kopf 48 und einen Gewindeschaft 50 aufweisende Spannanker 14 zum Zwecke der Montage einführbar ist. Der am Kopf 48 angesetzte Gewindeschaft 50 greift durch den weiten Teil 46 der Stufenbohrung des Schaftteils 16, durch den engen Teil 56 der Stufenbohrung im Paßzapfen 30 und die Zentralbohrung 44 im Kreuzkupplungselement 12 mit Spiel hindurch und ist in eine Gewindebohrung 58 im Paßzapfen 28 des Kopfteils 10 eingeschraubt. Zu diesem Zweck weist der Kopf 48 außerdem einen Innensechskant 60 auf, in welchen von außen her ein Sechskantschlüssel eingesteckt werden kann. Zwischen einer am Spannankerkopf 48 anliegenden Ausgleichsscheibe 62 und der Ringschulter 64 der Stufenbohrung 46 ist ein Federpaket 66 angeordnet, das dafür sorgt, daß die miteinander zu verbindenden Werkzeugteile 10,16 zwar spielfrei miteinander verspannt werden, daß aber dennoch ein Verdrehen der Exzenterhülse 18 und ein Verschieben des Kreuzkupplungselements 12 relativ zum Kopfteil 10 und Schaftteil 16 möglich ist. Das Verdrehen der Exzenterhülse 18 erfolgt bei festgehaltenem Schaftteil 16 mittels eines Verstellschlüssels am Umfangssechskant 68. Das Kreuzkupplungselement 12 hat neben der Drehkupplung zwischen Schaftteil 16 und Kopfteil 10 die Aufgabe, beim Verdrehen der Exzenterhülse 18 die Exzenterbewegung zwischen den Bohrungen 32 und 34 in eine Verschiebebewegung zwischen dem Kopfteil 10 und dem Schaftteil 16 umzusetzen. Der Verschiebeweg kann dabei an einer Skala 70 auf der Exzenterhülse 18 gegenüber einem Nullstrich 72 am Schaftteil abgelesen werden.

Ein durch das Bohrwerkzeug hindurchgehender zentraler, in den Spanraum 78 mündender Kühlmittelkanal 80 sorgt dafür, daß die Bearbeitungsstelle mit einem Kühlmittel beaufschlagt werden kann.

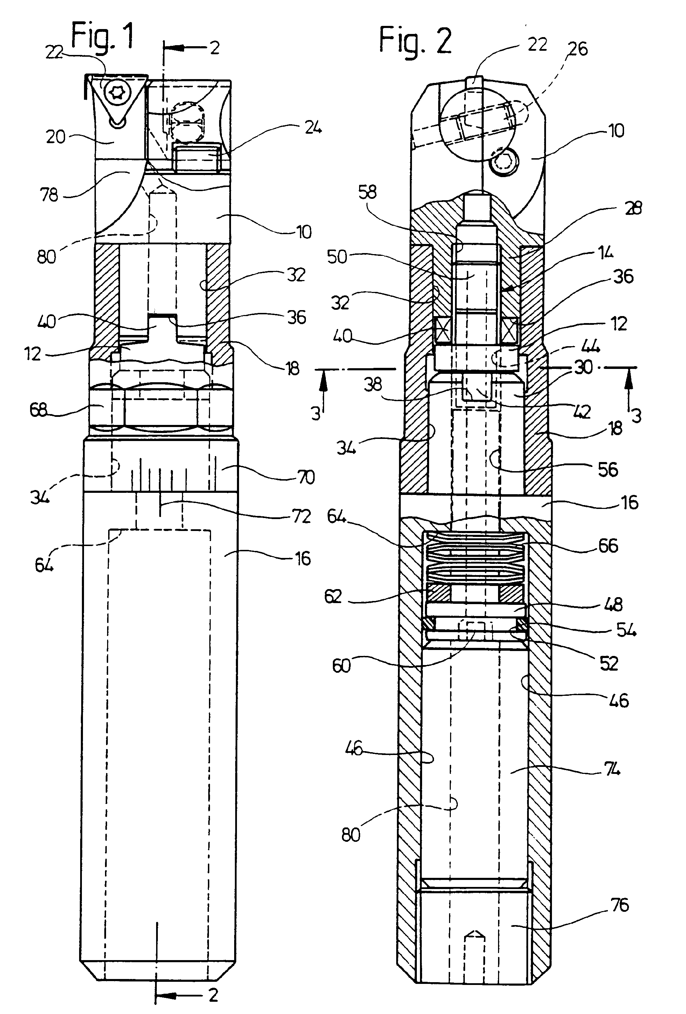

Die in den Fig. 1 bis 3 dargestellte Feindrehbohrstange weist ein auf seiner gesamten Länge zylindrisches Schaftteil 16 auf, dessen vom Kopfteil 10 abgewandtes Ende in ein Werkzeugspannfutter einer Maschinenspindel einspannbar ist. Das offene Ende des Schaftteils 16 ist durch ein Füllstück 74 und eine in ein Innengewinde der Stufenbohrung 46 eingedrehte Endschraube 76 verschlossen. Die Teile 74,76 bilden zum einen eine Verdrehsicherung für den Spannanker 14, zum anderen dient das aus einem schweren Metall, wie Blei, bestehende Füllstück 74 zur Verbesserung der Dämpfungseigenschaften der Bohrstange und zur Aussteifung des Schaftteils 16. Der zum Spannraum 78 führende Kühlmittelkanal 80 ist aus Bohrungen in den Teilen 76,74,14,10 zusammengesetzt. Ein in einer Umfangsnut 52 des Spannankerkopfs 48 angeordneter O-Ring 54 gewährleistet eine flüssigkeitsdichte Führung des Spannankerkopfs an der Innenfläche des erweiterten Teils der Stufenbohrung 46 und damit eine leckfreie Abdichtung des Kühlmittelkanals 80 zwischen dem Spannankerkopf 48 und dem Spanraum 78.

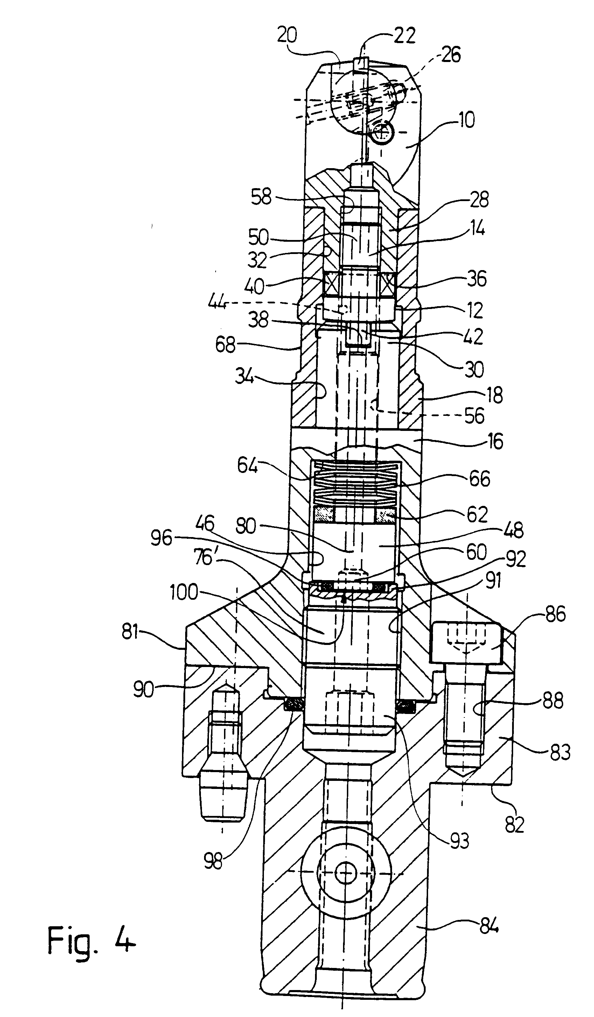

Bei dem in Fig. 4 gezeigten Ausführungsbeispiel ist das Schaftteil 16 an seinem vom Kopfteil 10 abgewandten Ende unter Erweiterung seines Außendurchmessers als Flansch 81 ausgebildet und mit einem Kupplungsteil 83 verbunden, dessen axial überstehender, von einer ringförmigen Planfläche 82 umgebener Paßzapfen 84 in einer entsprechenden Paßbohrung einer nicht dargestellten Werkzeugmaschinenspindel oder eines modularen Zwischenstücks unter axialer Anpressung der Planfläche 82 gegen eine entsprechende, die Paßbohrung umgebende Planfläche verspannt werden kann. Die Verbindung zwischen dem Flansch 81 und dem Kupplungsteil 83 erfolgt durch vier in Sacklochbohrungen 88 des Kupplungsteils 83 eingreifende Halteschrauben 86 sowie durch zwei als Verdrehsicherung wirkende, nicht dargestellte, in axialer Richtung über die Stirnfläche 90 des Schaftteils 16 überstehende und in entsprechende Paßbohrungen im Kupplungsteil 83 eingreifende Zylinderstifte.

Eine in ein Innengewinde 91 der Stufenbohrung 46 eingeschraubte und mit einer Ringfläche 92 gegen die spindelseitige Stirnfläche des Spannankerkopfs 48 im Schaftteil 16 verspannte Endschraube 76' sichert den Spannanker 14 gegen selbsttätiges Herausdrehen und dient mit ihrem in axialer Richtung über den Flansch 81 überstehenden Teil 93 als Zentrierzapfen 93 beim Verbinden des Schaftteils 16 mit dem Kupplungsteil 83. Die Abdichtung des durch Bohrungen im Kupplungsteil 83, in der Endschraube 76', im Spannanker 14 und im Kopfteil 10 gebildeten zentralen Kühlmittelkanals 80 erfolgt durch zwei gegen Stirnflächen des Spannankerkopfs 48 und der Endschraube 76' bzw. des Schaftteils 16 und des Kupplungsstücks 84 anliegend eingespannte 0-Ringe 96 und 98, die sich in radialer Richtung an einem am Spannankerkopf 48 angeformten, axial überstehenden Hohlzapfen 100 bzw. am Zentrierzapfen 93 der Endschraube 76' abstützen.

Eine zur Änderung der Spannkraft vorzunehmende Verstellung des Spannankers 14 kann mit Hilfe eines durch die Kühlmittelbohrungen im Kupplungsteil 83 und in der Endschraube 76' hindurch in den Innensechskant 60 des Spannankerkopfs 48 eingreifenden Verstellschlüssels erfolgen.

Gegenüber der in den Fig. 1 bis 3 dargestellten Bohrstange mit zylindrischem Schaftteil weist das mit dem Kupplungsteil 83 verbundene Bohrwerkzeug nach Fig. 4 eine höhere Steifigkeit bei gleichzeitig kürzerer Baulänge auf.

## Patentansprüche

1. Werkzeug, insbesondere Feindrehbohrstange, für den Einsatz in Werkzeugmaschinen mit einem an einer rotierenden Maschinenspindel ankuppelbaren Schaftteil (16), einem mit dem Schaftteil (16) drehfest verbundenen und gegenüber diesem quer verstellbaren Kopfteil (10) und einem im Kopfteil (10) angeordneten Schneidenträger (20), **dadurch gekenn-** **zeichnet**, daß am Schaftteil (16) und am Kopfteil (10) einander zugewandte, an ihren stirnseitigen Enden mit radial verlaufenden Stirnnuten (36,38) versehene zylindrische Paßzapfen (28,30) angeformt sind, daß zwischen den stirnseitigen Enden der Paßzapfen (28,30) ein Kreuzkupplungselement (12) mit axial nach beiden Seiten überstehenden, in die zueinander senkrecht ausgerichteten Stirnnuten (36,38) der Paßzapfen (28,30) radial verschiebbar eingreifenden Kupplungsklauen angeordnet ist, daß die beiden Paßzapfen (28,30) in zueinander exzentrische Paßbohrungen (32,34) einer gegenüber den Paßzapfen verdrehbaren Exzenterhülse (18) eingreifen, und daß das Kopfteil (10) und das Schaftteil (16) unter Zwischenspannen des Kupplungselements (12) und/oder der Exzenterhülse (18) mittels eines durch Bohrungen (46,56;44) des Schaftteils (16) und des Kreuzkupplungselements (12) mit radialem Spiel hindurchgreifenden, in ein Gewinde (58) des Kopfteils eingreifenden und gegen ein Widerlager im Bereich des Schaftteils (16) abgestützten Spannankers (14) verbunden sind.

2. Werkzeug nach Anspruch 1, **dadurch gekennzeichnet,** daß die Längsachse der den Paßzapfen (30) des Schaftteils (16) aufnehmenden Paßbohrung (34) mit der Werkzeugdrehachse fluchtet.

3. Werkzeug nach Anspruch 1 oder 2, **dadurch gekenn-** **zeichnet,** daß das im Inneren der Exzenterhülse (18) angeordnete Kreuzkupplungselement (12) als Ringstück mit nach beiden Seiten axial überstehenden, um 90° gegeneinander verdreht angeordneten Klauenpaaren (40,42) ausgebildet ist.

4. Werkzeug nach einem der Ansprüche 1 bis 3, **dadurch** **gekennzeichnet,** daß die Klauenflanken des Kreuzkupplungselements (12) von ihrer Wurzel zur Spitze hin schräg aufgeweitet sind.

5. Werkzeug nach einem der Ansprüche 1 bis 4, **dadurch** **gekennzeichnet,** daß das Schaftteil (16) eine sich zur Zapfenseite verengende axiale Stufenbohrung (46,56) aufweist, und daß zwischen einer Schulter (64) der Stufenbohrung und einem Kopf (48) des Spannankers (14) vorzugsweise als Federpaket (66) ausgebildete Federmittel angeordnet sind.

6. Werkzeug nach Anspruch 5, **dadurch gekennzeichnet,** daß zwischen dem Spannankerkopf (48) und dem Federpaket (66) ein Distanzring (62) angeordnet ist.

7. Werkzeug nach Anspruch 5 oder 6, **dadurch gekenn-** **zeichnet,** daß die Stufenbohrung (46,56) auf der Seite des Spannankerkopfes (48) mit einer Endschraube (76,76') verschlossen ist.

8. Werkzeug nach Anspruch 7, **gekennzeichnet durch** ein die Stufenbohrung (46,56) ausfüllendes, vorzugsweise aus einem schweren Werkstoff, wie Blei, bestehendes Füllstück (74).

9. Werkzeug nach einem der Ansprüche 1 bis 8, **gekenn-** **zeichnet durch** ein mit dem spindelseitigen Ende des Schaftteils (16) verbindbares Kupplungsteil (83) mit einer spindelseitig angeordneten, zur Werkzeugdrehachse senkrechten Planfläche (82) und einem axial über die Planfläche (82) überstehenden Paßzapfen (84).

10. Werkzeug nach Anspruch 9, **dadurch gekennzeichnet**, daß der Spannanker (14) und gegebenenfalls das Füllstück (74), die Endschraube (76,76') und das Kupplungsteil (83) einen zum Spanraum (78) des Werkzeugs führenden axialen Kühlmittelkanal (80) aufweisen.

11. Werkzeug nach Anspruch 10, **dadurch gekennzeichnet,** daß der Spannanker (14) mittels eines durch den Kühlmittelkanal (80) hindurchgreifenden Verstellwerkzeugs in seiner Spannkraft verstellbar ist.

12. Werkzeug nach einem der Ansprüche 5 bis 11, **da****durch gekennzeichnet,** daß der Spannankerkopf (48) eine Umfangsnut (52) zur Aufnahme eines gegen die Innenfläche der Stufenbohrung (46) anliegenden elastischen Dichtungsrings (54) aufweist.

13. Werkzeug nach einem der Ansprüche 1 bis 11, **ge****kennzeichnet durch** einen an einander gegenüberliegenden Stirnflächen der Endschraube (76') und des Spannankerkopfs (48) anliegenden, den Kühlmittelkanal (80) nach außen hin abdichtenden elastischen Dichtungsring (96).

14. Werkzeug nach Anspruch 13, **dadurch gekennzeichnet**, daß der Dichtungsring (96) in radialer Richtung an einem am Spannankerkopf (48) angeformten, axial überstehenden Hohlzapfen (100) abgestützt ist.

15. Werkzeug nach einem der Ansprüche 9 bis 14, **ge****kennzeichnet durch** einen an einander gegenüberliegenden Stirnflächen des Schaftteils (16) und des Kupplungsteils (83) anliegenden, in radialer Richtung an der axial über das Schaftteil (16) überstehenden Endschraube (76') abgestützten elastischen Dichtungsring (98).

16. Werkzeug nach einem der Ansprüche 1 bis 15, **da-** **durch gekennzeichnet,** daß die Exzenterhülse (18) einen Außenmehrkant (68) für den Eingriff eines Verstellschlüssels aufweist.

17. Werkzeug nach einem der Ansprüche 1 bis 16, **da-** **durch gekennzeichnet,** daß die Exzenterhülse (18) an ihrem zum Schaftteil (16) oder zum Kopfteil (10) weisenden Ende einen Skalenring (70) trägt.

18. Werkzeug nach einem der Ansprüche 1 bis 17, **da-** **durch gekennzeichnet,** daß der Schneidenträger (20) am Kopfteil (10) radial verstellbar und festlegbar angeordnet ist.

## Claims

1. A tool, in particular a fine-turning boring bar, for use in machine tools, comprising a shank part (16) which can be coupled to a rotating tool spindle, a head part (10) which is secured to the shank part (16) so as to rotate therewith and is adjustable transversely with respect to the shank part (16), and a cutting support (20) arranged in the head part (10), characterized in that cylindrical fitting pins (28, 30), which face one another and have radially extending face grooves (36, 38)at their mutually adjacent ends, are formed on the shank part (16) and on the head part (10), that between the mutually adjacent ends of the fitting pins (28, 30) there is arranged a cross-coupling element (12) with mobile coupling claws projecting axially from both sides thereof and are radially movably received into the face grooves (36, 38) on the fitting pins (28, 30), which face grooves are aligned perpendicularly with respect to one another, that the two fitting pins (28, 30) are received into fitting holes (32, 34) of an eccentric sleeve (18) which is rotatable relative to the fitting pin, which fitting holes (32, 34) are eccentric to one another, and that the head part (10) and the shank part (16) are connected, with the intermediate clamping of the coupling element (12) and/or the eccentric sleeve (18), by means of a clamping anchor (14) extending with radial clearance through holes (46, 56; 44) in the shank part (16) and in the cross-coupling element (12) and engaging a thread (58) on the head part and supported against an abutment in the area of the shank part (16).

2. The tool according to Claim 1, characterized in that the longitudinal axis of the fitting hole (34) receiving the fitting pin (30) of the shank part (16) is aligned with the axis of rotation of the tool.

3. The tool according to Claim 1 or 2, characterized in that the cross-coupling element (12) arranged inside of the eccentric sleeve (18) is constructed as an annular piece with pairs of claws (40, 42)axially projecting to both sides and angularly spaced at 90° relative to one another.

4. The tool according to one of the Claims 1 to 3, characterized in that the claw flanks of the cross-coupling element (12) widen inclined from their root toward their tip.

5. The tool according to one of the Claims 1 to 4, characterized in that the shank part (16) has a stepped hole (46, 56), and that between a shoulder (64) of the stepped hole and a head (48) of the clamping anchor (14) there are arranged spring means preferably constructed as a set of springs.

6. The tool according to Claim 5, characterized in that a spacer ring (62) is arranged between the clamping-anchor head (48) and the set of springs (66).

7. The tool according to Claim 5 or 6, characterized in that the stepped hole (46, 56) is closed off with an end screw (76, 76') on the side of the clamping-anchor head (76, 76').

8. The tool according to Claim 7, characterized by a fill piece (74) filling the stepped hole (46, 56) and preferably consisting of a heavy material, like lead.

9. The tool according to one of the Claims 1 to 8, characterized by a coupling part (83) connectable to the end of the shank part (16) on the side of the spindle, with a flat surface (82) arranged on the side of the spindle and perpendicular with respect to the axis of rotation of the tool and with a fitting pin (84) projecting axially beyond the flat surface (82).

10. The tool according to Claim 9, characterized in that the clamping anchor (14) and, if necessary, the fill piece (74), the end screw (76, 76') and the coupling part (83) have an axial cooling-medium channel (80) leading to the chip flute (78) of the tool.

11. The tool according to Claim 10, characterized in that the clamping anchor (14) can be adjusted in its clamping force by means of an adjusting tool insertable through the cooling-medium channel (80).

12. The tool according to one of the Claims 5 to 11, characterized in that the clamping-anchor head (48) has a peripheral groove (52) to receive an elastic gasket ring (54) resting against the inner surface of the stepped hole (46).

13. The tool according to one of the Claims 1 to 11, characterized by an elastic gasket ring (96) resting on oppositely lying faces of the end screw (76') and of the clamping-anchor head (48) and sealing off the cooling-medium channel (80) to the exterior.

14. The tool according to Claim 13, characterized in that the gasket ring (96) is supported in radial direction on an axially projecting hollow pin (100) formed on the clamping-anchor head (48).

15. The tool according to one of the Claims 9 to 14, characterized by an elastic gasket ring (98) resting on oppositely lying faces of the shank part (16) and of the coupling part (83) and supported in radial direction on the end screw (76') projecting beyond the shank part (16).

16. The tool according to one of the Claims 1 to 15, characterized in that the eccentric sleeve (18) has an outer multi-surface section (68) for the engagement by an adjusting wrench.

17. The tool according to one of the Claims 1 to 16, characterized in that the eccentric sleeve (18) carries a scale ring (70) at its end facing toward the shank part (16) or toward the head part (10).

18. The tool according to one of the Claims 1 to 17, characterized in that the cutting support (20) is fixedly and radially adjustably arranged on the head part (10).

## Revendications

1. Outil, en particulier barre d'alésage, destiné à être utilisé sur des machines-outils et qui comporte une partie formant fût (16) pouvant être raccordée à une broche de machine rotative, une partie formant tête (10) reliée de manière fixe en rotation à la partie formant fût (16) et déplaçable transversalement par rapport à cette dernière, et un porte-plaquette (20) monté dans la partie formant tête (10), caractérisé en ce qu'à la partie formant fût (16) et à la partie formant tête (10) sont rapportées des chevilles d'ajustage cylindriques (28, 30) disposées l'une en regard de l'autre et présentant à leurs extrémités frontales des rainures frontales (36, 38) s'étendant radialement, en ce qu'entre les extrémités frontales des chevilles d'ajustage (28, 30) est monté un élément formant joint universel (12) présentant des griffes de raccordement faisant saillie axialement des deux côtés et qui s'engagent, de façon à pouvoir coulisser radialement, dans les rainures frontales (36, 38), orientées perpendiculairement les unes aux autres, des chevilles d'ajustage (28, 30), en ce que les deux chevilles d'ajustage (28, 30) s'engagent dans des alésages ajustés (32, 34), excentrés l'un par rapport à l'autre, d'une douille à excentrique (18) susceptible d'être tournée par rapport aux chevilles d'ajustage et en ce que la partie formant tête (10) et la partie formant fût (16), en serrant entre elles l'élément formant joint (12) et/ou la douille à excentrique (18), sont reliées entre elles au moyen d'un tirant tendeur (14) qui, passant avec un certain jeu radial par des alésages (46, 56 ; 44) de la partie formant fût (16) et de l'élément formant joint universel (12), s'engage dans un filet (58) de la partie formant tête et prend appui contre une butée dans la région de la partie formant fût (16).

2. Outil selon la revendication 1, caractérisé en ce que l'axe longitudinal de l'alésage ajusté (34) recevant la cheville d'ajustage (30) de la partie formant fût (16) s'aligne sur l'axe de rotation de l'outil.

3. Outil selon la revendication 1 ou 2, caractérisé en ce que l'élément formant joint universel (12) monté à l'intérieur de la douille à excentrique (18) est réalisé sous la forme d'une pièce annulaire munie de paires de griffes (40, 42) faisant saillie axialement des deux côtés et décalées en rotation l'une par rapport à l'autre de 90°.

4. Outil selon l'une quelconque des revendications précédentes, caractérisé en ce que les flancs des griffes de l'élément formant joint universel (12) s'élargissent obliquement à partir de leur racine en direction du sommet.

5. Outil selon l'une quelconque des revendications précédentes, caractérisé en ce que la partie formant fût (16) présente un alésage à gradins axial (46, 56), se rétrécissant du côté de la cheville et ce qu'entre un épaulement (64) de l'alésage à gradins et la tête (48) du tirant tendeur (14) sont de préférence montés des moyens à ressort réalisés sous la forme de rondelles Belleville (66).

6. Outil selon la revendication 5, caractérisé en ce qu'entre la tête (48) du tirant tendeur et les rondelles Belleville (66) est montée une bague d'espacement (62).

7. Outil selon la revendication 5 ou 6, caractérisé en ce que l'alésage à gradins (46, 56) est obturé, du côté de la tête (48) du tirant tendeur, au moyen d'une vis terminale (76, 76').

8. Outil selon la revendication 7, caractérisé par une pièce de remplissage (74) qui remplit l'alésage à gradins (46, 56) et est constituée de préférence d'une matière lourde telle que le plomb.

9. Outil selon l'une quelconque des revendications précédentes, caractérisé par une pièce de raccordement (83)pouvant être reliée à l'extrémité, côté broche, de la partie formant fût (16), et présentant, du côté de la broche, une surface plane (82) perpendiculaire à l'axe de rotation de l'outil, et un tenon d'ajustage (84) faisant saillie axialement au-delà de la surface plane (82).

10. Outil selon la revendication 9, caractérisé en ce que le tirant tendeur (14) et éventuellement la pièce de remplissage (74), la vis terminale (76, 76') et la pièce de raccordement (83) présentent un canal à fluide de refroidissement axial (80) conduisant à l'espace à copeaux (78)de l'outil.

11. Outil selon la revendication 10, caractérisé en ce que le tirant tendeur (14) peut être réglé, en ce qui concerne sa force de serrage, au moyen d'un outil de réglage passant par le canal à fluide de refroidissement (80).

12. Outil selon l'une quelconque des revendications 5 à 11, caractérisé en ce que la tête (48) du tirant tendeur présente une rainure périphérique (52) destinée à recevoir une bague d'étanchéité élastique (54) prenant appui contre la surface intérieure de l'alésage à gradins (46).

13. Outil selon l'une quelconque des revendications 1 à 11, caractérisé par une bague d'étanchéité élastique (96) qui étanchéifie le canal à fluide de refroidissement (80) vis-à-vis de l'extérieur et prend appui contre des faces frontales, disposées l'une en regard de l'autre, de la vis terminale (76') et de la tête de tirant tendeur (48).

14. Outil selon la revendication 13, caractérisé en ce que la bague d'étanchéité (96) s'appuie en direction radiale contre une cheville creuse (100) rapportée à la tête de tirant tendeur (48) et faisant saillie axialement.

15. Outil selon l'une quelconque des revendications 9 à 14, caractérisé par une bague d'étanchéité élastique (98) qui, placée au contact de faces frontales, disposées l'une en regard de l'autre, de la partie formant fût (16)et de la pièce de raccordement (83), s'appuie en direction radiale contre la vis terminale (76') faisant saillie axialement au-delà de la partie formant fût (16).

16. Outil selon l'une quelconque des revendications précédentes, caractérisé en ce que la douille à excentrique (18) présente une partie polygonale extérieure (68)pour l'engagement d'une clé de réglage.

17. Outil selon l'une quelconque des revendications précédentes, caractérisé en ce que la douille à excentrique (18) porte un anneau gradué (70) à son extrémité orientée vers la partie formant fût (16) ou vers la partie formant tête (10).

18. Outil selon l'une quelconque des revendications précédentes, caractérisé en ce que le porte-plaquette (20)prévu sur la partie formant tête (10), est monté de façon à être réglable radialement et susceptible d'être assujetti de manière fixe.
